Europäisches Patentamt

European Patent Office

Office européen des brevets

(11) Veröffentlichungsnummer: **0 416 650 A2**

# (12) EUROPÄISCHE PATENTANMELDUNG

(21) Anmeldenummer: 90117299.9

(51) Int. Cl.⁵: **B23Q 11/08**, B23B 25/04

(22) Anmeldetag: 07.09.90

(30) Priorität: 08.09.89 DE 3930018

(43) Veröffentlichungstag der Anmeldung:
13.03.91 Patentblatt 91/11

(84) Benannte Vertragsstaaten:
DE ES FR GB IT

(71) Anmelder: Traub AG
Ulmer Strasse 49-55
W-7313 Reichenbach/Fils(DE)

(72) Erfinder: Leimeter, Johann, Dipl.-Ing. (FH)
Breite Strasse 36/1

W-7061 Lichtenwald 2(DE)
Erfinder: Kersten, Günter
Mozartstrasse 4
W-7311 Hochdorf(DE)
Erfinder: Zitzelsberger, Peter, Dipl.-Ing. (FH)
Schönblickstrasse 14
W-7056 Weinstadt(DE)

(74) Vertreter: Goetz, Rupert, Dipl.-Ing. et al
Wuesthoff & Wuesthoff Patent- und
Rechtsanwälte Schweigerstrasse 2
W-8000 München 90(DE)

(54) **Drehmaschine mit abgeschlossenem Arbeitsraum.**

(57) Die Drehmaschine hat zwei Kreuzschlittenanordnungen (20) mit je einem am Maschinenbett (10) geführten Z-Schlitten (22) sowie einem Y-Schlitten (26) und einem X-Schlitten (32), auf dem ein Revolverkopf (34) gelagert ist. Die Kreuzschlittenanordnungen (20) sind von je einer quaderförmigen Verkleidung (50) umschlossen, die am zugehörigen Z-Schlitten (22) befestigt ist und zu dessen Bewegungsrichtung parallele Seitenwände (52, 54) sowie eine zu dieser Bewegungsrichtung normale Stirnwand (56) aufweist. Mindestens ein Teil jeder Stirnwand (56) ist in deren Ebene beweglich. Der Arbeitsraum (A) der Drehmaschine ist durch eine ortsfeste, rahmenartige Endwand (60) begrenzt, durch die sich die Seitenwände (52, 54) der Verkleidungen (50) abgedichtet hindurcherstrecken. Jeder Revolverkopf (34) weist einen Kragen (36) auf, der sich durch den beweglichen Teil der Stirnwand (56) der zugehörigen Verkleidung (50) abgedichtet hindurcherstreckt.

FIG. 1

## DREHMASCHINE MIT ABGESCHLOSSENEM ARBEITSRAUM

Die Erfindung betrifft eine Drehmaschine mit
- einem Maschinenbett, an dem eine erste Führung ausgebildet ist,
- einem Spindelstock, in dem eine Arbeitsspindel gelagert ist,
- mindestens einer Kreuzschlittenanordnung, die einen an der ersten Führung geführten ersten Schlitten sowie mindestens einen rechtwinklig dazu verschiebbaren Schlitten aufweist,
- einem Revolverkopf, der drehbar auf der Kreuzschlittenanordnung gelagert ist, und
- einem Arbeitsraum, der durch eine Stirnwand des Spindelstocks begrenzt ist, und in den die Arbeitsspindel sowie der Revolverkopf hineinragen.

Eine solche Drehmaschine ist aus der DE 3035451 C2 bekannt. Sie hat ein Maschinenbett mit zwei parallel zur Arbeitsspindel verlaufenden Längsführungen, die üblicherweise als Z-Führungen bezeichnet werden, und auf denen je ein Längs- oder Z-Schlitten geführt ist. Jeder dieser Schlitten hat eine Quer- oder X-Führung, auf der ein Quer-oder X-Schlitten geführt ist. Auf jedem dieser Schlitten ist ein Revolverkopf mit parallel zur Arbeitsspindel, also in Z-Richtung, angeordneter Revolverachse gelagert. Einer dieser Revolver ist mit seiner freien Stirnfläche der Arbeitsspindel zugewandt; der zweite Revolver weist mit seiner freien Stirnflächen in die entgegengesetzte Richtung und steht einer Gegenspindel gegenüber, die auf derselben Z-Führung geführt ist wie der zum zweiten Revolver gehörige Z-Schlitten.

Bei einer solchen Drehmaschine werden die verschiedenen Schlitten sowie deren Führungen und Antrieb im Betrieb durch Späne und Kühlflüssigkeit belastet. Es ist deshalb üblich, die für die Arbeitsgenauigkeit der Maschine wesentlichen Bauteile abzudecken oder vollständig abzukapseln, wodurch aber bei bekannten Konstruktionen die Wartung dieser Bauteile erschwert wird.

Aus der DE 2731252 A1 ist eine Drehmaschine bekannt, deren gesamter Arbeitsraum einschließlich einer darin verfahrbaren Kreuzschlittenanordnung von einer quaderförmigen Verkleidung abgedeckt ist. Diese Verkleidung ist heb- und senkbar sowie um eine senkrechte Achse wegschwenkbar an einem Halter abgestützt, der an einem Bettschlitten oder Support der Drehmaschine befestigt ist. Die Verkleidung dient dem Schutz des Benutzers der Drehmaschine, ist aber weder vorgesehen noch geeignet, bestimmte Teile der Drehmaschine vor Verschmutzung zu schützen.

Der Erfindung liegt deshalb die Aufgabe zugrunde, eine Drehmaschine der eingangs beschriebenen Gattung derart weiterzubilden, daß möglichst viele der für Arbeitsgenauigkeit wesentlichen Bauteile vor Spänen und Kühlflüssigkeit geschützt werden, ohne daß sie allzu sperrig werden oder ihre Zugänglichkeit zu Wartungs- und Reparaturzwecken wesentlich erschwert wird.

Die Aufgabe ist erfindungsgemäß dadurch gelöst, daß
- die Kreuzschlittenanordnung vom Arbeitsraum durch eine quaderförmige Verkleidung getrennt ist, die an dem ersten Schlitten befestigt ist und zu dessen Bewegungsrichtung parallele Seitenwände sowie eine zu dieser Bewegungsrichtung normale Stirnwand und eine Bodenplatte aufweist, welche die Kreuzschlittenanordnung umschließen,
- mindestens ein Teil der Stirnwand in deren Ebene beweglich ist,
- der Arbeitsraum durch eine ortsfeste, rahmenartige Endwand begrenzt ist, durch die sich die Seitenwände der Verkleidung abgedichtet hindurcherstrecken, und
- der Revolverkopf einen Kragen aufweist, der sich durch den beweglichen Teil der Stirnwand der Verkleidung abgedichtet hindurcherstreckt.

Dadurch gelingt es, bei vorgegebener Bewegungsfreiheit des Revolverkopfes in zwei oder sogar drei zueinander rechtwinkligen Koordinatenrichtungen die Gesamtlänge aller Dichtungen so gering wie möglich zu halten und dadurch die empfindlichen Teile der Drehmaschine besonders wirksam zu schützen, ohne deren Zugänglichkeit mehr als nötig zu beschränken.

Vorteilhafte Weiterbildungen der Erfindung ergeben sich aus den Unteransprüchen.

Ein Ausführungsbeispiel der Erfindung wird im folgenden anhand schematischer Zeichnungen mit weiteren Einzelheiten erläutert. Es zeigen:

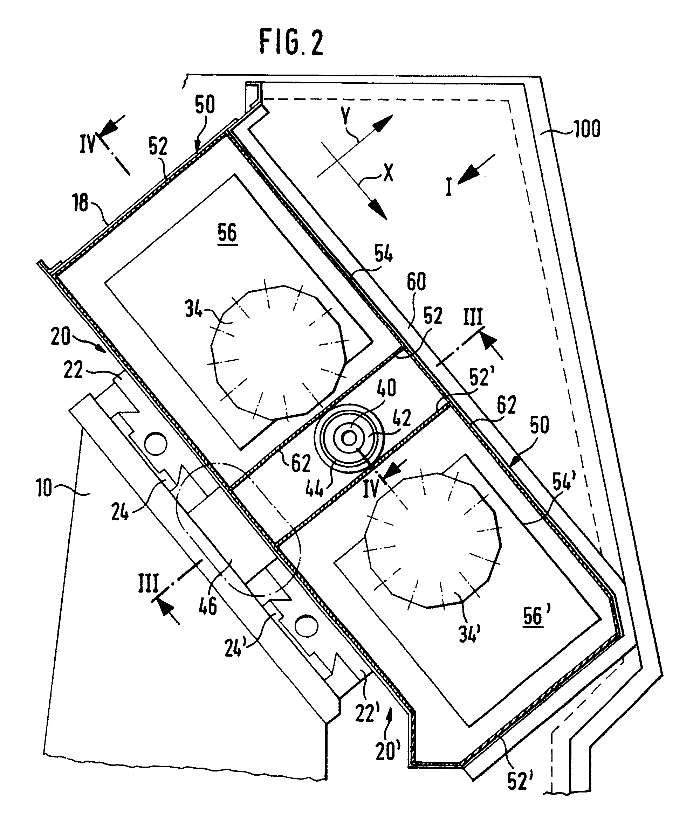

Fig. 1 eine Teilansicht einer Drehmaschine in Richtung des Pfeils I in Fig. 2,

Fig. 2 den Schnitt II-II in Fig. 1,

Fig. 3 den Schnitt III-III in Fig. 2,

Fig. 4 den Schnitt IV-IV in Fig. 2,

Fig. 5 die Einzelheit V in Fig. 3,

Fig. 6 die Ansicht in Richtung des Pfeils VI in Fig. 5,

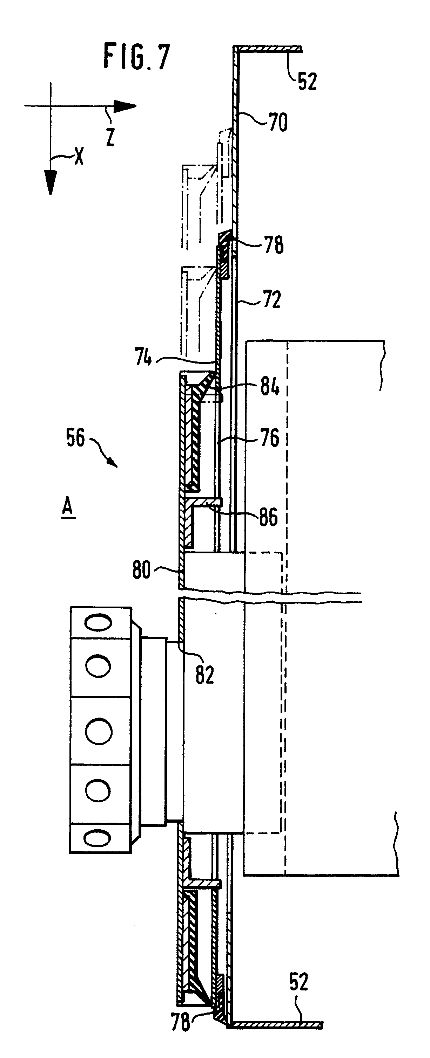

Fig. 7 die Einzelheit VII in Fig. 4 und

Fig. 8 die Einzelheit VIII in Fig. 2.

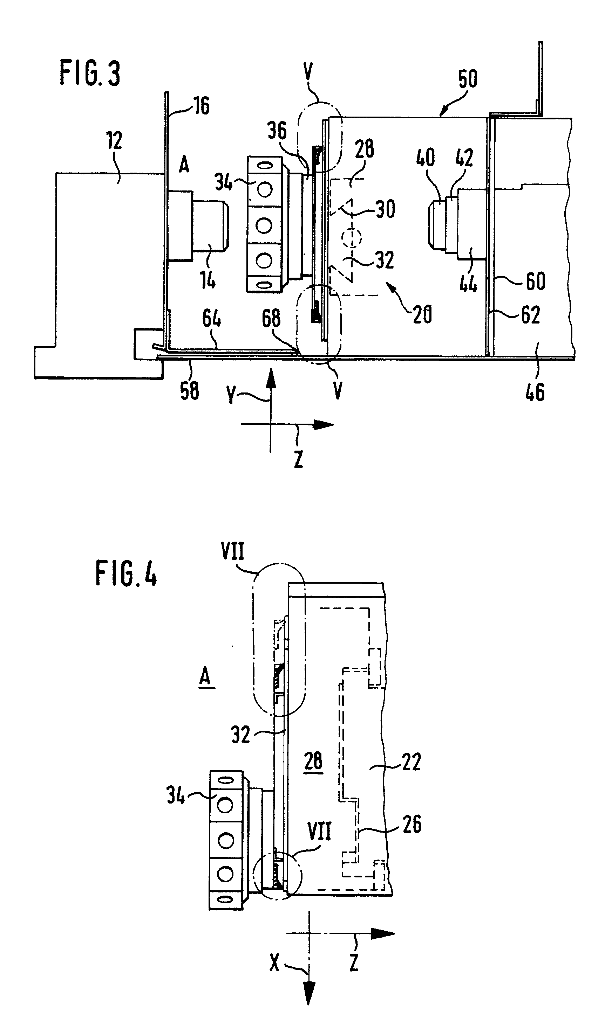

Die dargestellte Drehmaschine hat ein schräges Maschinenbett 10 und einen Spindelstock 12, in dem eine Arbeitsspindel 14 mit waagerechter, zur schrägen Ebene des Maschinenbetts 10 paralleler Achse gelagert ist. Die Arbeitsspindel 14 ragt durch eine Stirnwand 16 des Spindelstocks 12 in den Arbeitsraum A der Drehmaschine hinein. Der Arbeitsraum A ist an der vom Betrachter der Fig. 3 abgewandten Seite durch eine Rückwand 18 begrenzt, die sich im rechten Winkel zur Ebene des Maschinenbetts 10 und zur Stirnwand 16 erstreckt.

Die Drehmaschine hat eine obere und eine untere Kreuzschlittenanordnung 20 bzw. 20' mit je einem Z-Schlitten 22 bzw. 22', der auf einer zur Arbeitsspindel 14 parallelen Z-Führung 24 bzw. 24' geführt ist und eine im rechten Winkel zur schrägen Ebene des Maschinenbetts 10 nach oben weisende Y-Führung 26 bzw. 26' aufweist. In den Y-Führungen 26 und 26' ist je ein Y-Schlitten 28 bzw. 28' geführt, an dessen dem Spindelstock 12 zugewandter Seite eine X-Führung 30 bzw. 30' ausgebildet ist, die sich im rechten Winkel zu den zugehörigen Z- und Y-Führungen erstreckt. An jeder der X-Führungen 30 und 30' ist ein X-Schlitten 32 bzw. 32' geführt, auf dem ein Revolverkopf 34 bzw. 34' mit waagerechter, zur Arbeitsspindel 14 paralleler Achse B bzw. B' gelagert ist. Jeder der Revolverköpfe 34 und 34' hat einen Kragen 36 bzw. 36' und trägt mehrere auswechselbare Werkzeughalter 38 bzw. 38'.

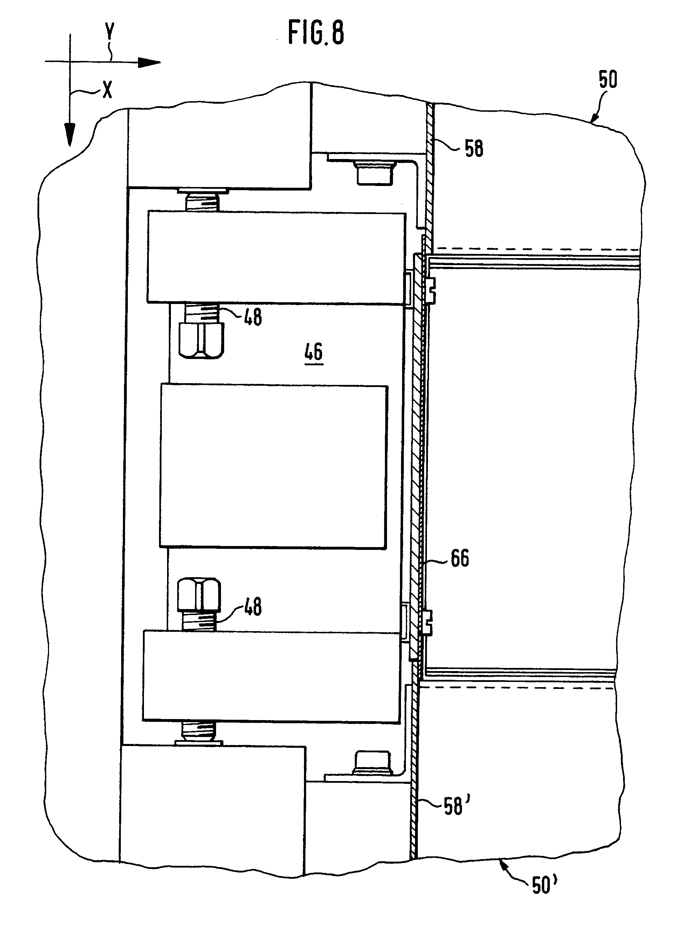

Zwischen den beiden Kreuzschlittenanordnungen 20 und 20' ist eine Gegenspindel 40 mit der Arbeitsspindel 14 fluchtend in einer Pinole 42 gelagert, die in einem Pinolengehäuse 44 in ihrer Längsrichtung, also in Z-Richtung, verschiebbar geführt ist. Das Pinolengehäuse 44 hat einen Sockel 46, der am Maschinenbett 10 in X- und Y-Richtung einstellbar befestigt ist. In Fig. 8 sind Schrauben 48 für die Einstellung in X-Richtung erkennbar; für die Einstellung in Y-Richtung ist zwischen dem Maschinenbett 10 und dem Sockel 46 ein Keil angeordnet, der in Z-Richtung verstellbar ist.

Jede der beiden Kreuzschlittenanordnungen 20 und 20' ist, soweit sie in den Arbeitsraum A hineinragt oder hineinbewegbar ist, von einer quaderförmigen Verkleidung 50 bzw. 50' umschlossen. Diese besteht im wesentlichen aus zwei Seitenwänden 52 bzw. 52', die sich parallel zu den Y- und Z-Achsen erstrecken, einer Seitenwand 54 bzw. 54', die sich parallel zu den X- und Z-Achsen erstreckt, sowie einer Stirnwand 56 bzw. 56', die sich parallel zu den X- und Y-Achsen erstreckt. An jedem der beiden Z-Schlitten 22 und 22' ist ferner eine Bodenplatte 58 bzw. 58' befestigt, die sich parallel zu den X- und Z-Achsen in Richtung zum Spindelstock 12 hin erstreckt.

Die beiden Verkleidungen 50 und 50' ragen durch je eine ortsfeste und starre Endwand 60 hindurch, die den vom Spindelstock 12 entfernten Abschluß des Arbeitsraums A bildet und sich parallel zur Stirnwand 16, also in einer X-Y-Ebene, erstreckt. Die Endwand 60 besteht im wesentlichen aus starren Winkelprofilen, an denen elastische Abstreifer 62 befestigt sind, die gegen die Seitenwände 52 und 54 sowie 52' und 54' abdichten.

Die beiden Bodenplatten 58 und 58' dichten gegen eine zu ihnen parallele Deckplatte 64 ab, die dicht an der Stirnwand 16 des Spindelstocks 12 befestigt ist. Zwischen den beiden Bodenplatten 58 und 58' ist eine ortsfeste, am Sockel 56 befestigte, lamellenartig dünne Zwischenplatte 66 angeordnet, die dachziegelartig unter den in X-Richtung unteren, zur Z-Richtung parallelen Rand der oberen Bodenplatte 58 greift und über den dazu parallelen oberen Rand der Bodenplatte 58' greift. An dem vom Spindelstock entfernten Rand der Deckplatte 64 ist ein Abstreifer 68 befestigt, der gegen die beiden Bodenplatten 58 und die Zwischenplatte 66 abdichtet.

Die beiden Kreuzschlittenanordnungen 20 und 20' sind einander im wesentlichen gleich; deshalb wird im folgenden nur die erste von ihnen in weiteren Einzelheiten beschrieben.

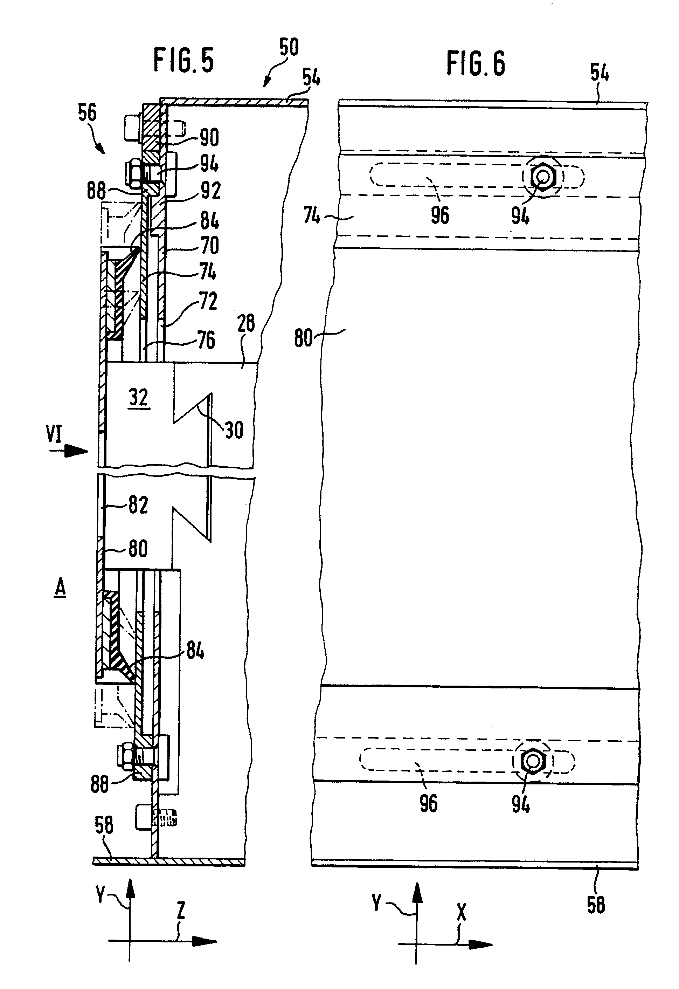

Die Stirnwand 56 der Verkleidung 50 besteht im wesentlichen aus einem an der Verkleidung befestigten Stirnrahmen 70 mit einer Aussparung 72, die gerade so groß ist, daß der Kragen 36 des Revolverkopfes 34 ausreichenden Bewegungsraum hat, die zugehörigen Y- und X-Schlitten 28 und 32 also zwischen ihren Endstellungen beliebig verfahrbar sind, ohne daß der Kragen 36 den Stirnrahmen 70 je berührt. Die Aussparung 72 ist durch eine mittlere Stirnplatte 74 abgedeckt, die ebenfalls eine Aussparung 76 aufweist; diese ist jedoch gemäß Fig. 5 nur in Y-Richtung ebenso breit wie die Aussparung 72; in X-Richtung ist die Aussparung 76 kleiner als der Bewegungsraum des Kragens 36 des Revolverkopfes 34. An den äußeren Rändern der mittleren Stirnplatte 74 ist ein Abstreifer 78 befestigt, der gegen den Stirnrahmen 70 abdichtet.

Die mittlere Stirnplatte 74 ist von einer äußeren Stirnplatte 80 überdeckt, die eine zentrale Aussparung 82 aufweist, durch die sich der Kragen 36 abgedichtet hindurcherstreckt. Die äußere Stirnplatte 80 ist somit in X- und Y-Richtung fest mit dem Revolverkopf 34 verbunden, also zusammen mit ihm gegenüber der mittleren Stirnplatte 74 verschiebbar und deshalb gegen diese mit einem Abstreifer 84 abgedichtet. An der äußeren Stirnplatte 80 sind außerdem Winkelstücke 86 befestigt, die in die Aussparung 76 der mittleren Stirnplatte 74 eingreifen und diese in X-Richtung mitnehmen, wenn der X-Schlitten 32 eine Bewegung ausführt, die den Spielraum des Kragens 36 in X-Richtung der Aussparung 76 überschreitet.

Bei üblichen Werkstückbearbeitungen durch Drehen ist der Bewegungsbedarf in Y-Richtung erheblich kleiner als in X-Richtung; deshalb sind an der mittleren Stirnplatte 74 in X-Richtung verlaufende Führungsleisten 88 befestigt, von denen eine zwischen entsprechenden Leisten 90 und 92 am Stirnrahmen 70 geführt ist. An den Führungsleisten 88 sind außerdem Schrauben 94 befestigt, die sich durch je ein in X-Richtung langgestrecktes Loch 96 im Stirnrahmen 70 erstrecken.

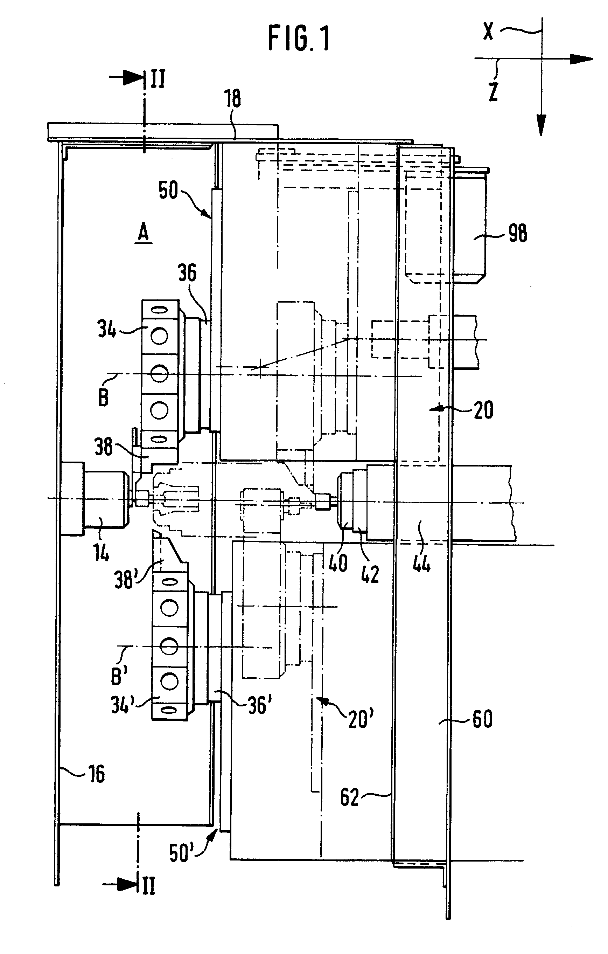

Jede der beiden Verkleidungen 50 und 50′ verhindert, daß Späne oder Kühlflüssigkeit irgendein Teil der zugehörigen Kreuzschlittenanordnung 20 bzw. 20′ oder deren Antriebsaggregate erreichen können. In Fig. 1 ist ein solches Antriebsaggregat 98 für die obere Kreuzschlittenanordnung 20 angedeutet. Trotz dieses wirksamen Schutzes bleiben die Kreuzschlittenanordnungen 20 und 20′ sowie deren Antriebsaggregate gut zugänglich, da die Verkleidungen 50 und 50′ an ihrem vom Spindelstock 12 entfernten Ende, also vom Spindelstock 12 aus gesehen jenseits der Endwand 60, offen sind.

Im Betrieb ist der Arbeitsraum A in üblicher Weise mit einer verschiebbaren Haube 100 abgedeckt, von der mindestens ein Teil durchsichtig ist.

## Ansprüche

1. Drehmaschine mit
- einem Maschinenbett (10), an dem eine erste Führung (24) ausgebildet ist,
- einem Spindelstock (12), in dem eine Arbeitsspindel (14) gelagert ist,
- mindestens einer Kreuzschlittenanordnung (20), die einen an der ersten Führung (24) geführten ersten Schlitten (22) sowie mindestens einen rechtwinklig dazu verschiebbaren Schlitten (28, 32) aufweist,
- einem Revolverkopf (34), der drehbar auf der Kreuzschlittenanordnung (20) gelagert ist, und
- einem Arbeitsraum (A), der durch eine Stirnwand (16) des Spindelstocks (12) begrenzt ist, und in den die Arbeitsspindel (14) sowie der Revolverkopf (34) hineinragen,
dadurch **gekennzeichnet,** daß
- die Kreuzschlittenanordnung (20) vom Arbeitsraum (A) durch eine quaderförmige Verkleidung (50) getrennt ist, die an dem ersten Schlitten (22) befestigt ist und zu dessen Bewegungsrichtung parallele Seitenwände (52, 54) sowie eine zu dieser Bewegungsrichtung normale Stirnwand (56) und eine Bodenplatte (58) aufweist, welche die Kreuzschlittenanordnung (20) umschließen,
- mindestens ein Teil der Stirnwand (56) in deren Ebene beweglich ist,
- der Arbeitsraum (A) durch eine ortsfeste, rahmenartige Endwand (60) begrenzt ist, durch die sich die Seitenwände (52, 54) der Verkleidung (50) abgedichtet hindurcherstrecken, und
- der Revolverkopf (34) einen Kragen (36) aufweist, der sich durch den beweglichen Teil der Stirnwand (56) der Verkleidung (50) abgedichtet hindurcherstreckt.

2. Drehmaschine nach Anspruch 1,
dadurch **gekennzeichnet,** daß die Bodenplatte (58) über die Stirnwand (56) der Verkleidung in Richtung zum Spindelstock (12) hinausragt und gegen eine zu ihr parallele, vom Spindelstock (12) wegragende Deckplatte (64) abdichtet.

3. Drehmaschine nach Anspruch 1 oder 2,
dadurch **gekennzeichnet,** daß in der Endwand (60) zwei Verkleidungen (50, 50′) abdichtend geführt sind, die je eine Kreuzschlittenanordnung (20, 20′) umschließen.

4. Drehmaschine nach Anspruch 3,
dadurch **gekennzeichnet,** daß die Endwand (60) zwischen den beiden Verkleidungen (50, 50′) eine Aussparung aufweist, durch die eine Pinole (42) hindurchragt, in der eine mit der Arbeitsspindel (14) fluchtende Gegenspindel (40) gelagert ist.

5. Drehmaschine nach den Ansprüchen 2 und 3,
dadurch **gekennzeichnet,** daß
- die beiden Kreuzschlittenanordnungen (20, 20′) und dementsprechend auch ihre Verkleidungen (50, 50′) und deren Bodenplatten (58, 58′) schräg übereinander angeordnet sind, und
- die obere Bodenplatte (58) eine Zwischenplatte (66), und diese die untere Bodenplatte (58′) dachziegelartig überlappt.

6. Drehmaschine nach einem der Ansprüche 1 bis 5, dadurch **gekennzeichnet,** daß die Stirnwand (56) der bzw. jeder Verkleidung (50) einen in bezug auf die Verkleidung (50) festen Stirnrahmen (70) sowie mindestens eine Stirnplatte (74, 80) aufweist, die zusammen mit dem zugehörigen Revolverkopf (34) beweglich und gegen ihn und den Stirnrahmen (70) abgedichtet ist.

# FIG. 1

# FIG.2

FIG.3

FIG.4

# FIG.5

50
54
56
90
94
88
92
84
70
74
72
76
28
32
30

VI →

82
80

A

84
88
58

Y
Z

# FIG.6

54

74
96
94

80

96
94

58

Y
X

FIG.7

## FIG.8